# EUROPÄISCHE PATENTSCHRIFT

(11) **EP 3 502 364 B1**
(45) Veröffentlichungstag und Bekanntmachung des Hinweises auf die Patenterteilung: **09.03.2022**
(21) Anmeldenummer: 18213735.6
(22) Anmeldetag: 18.12.2018
(51) Int. Cl.: E03C 1/122, F16L 55/07

(54) **ROHRBELÜFTER UND SYSTEM ZUR ROHRBELÜFTUNG**
PIPE VENTILATOR AND SYSTEM FOR PIPE VENTILATION
AÉRATEUR TUBULAIRE ET SYSTÈME D'AÉRATEUR TUBULAIRE

(30) Priorität: 19.12.2017 DE 102017130596
(43) Veröffentlichungstag der Anmeldung: 26.06.2019
(73) Patentinhaber: Sanitärtechnik Eisenberg GmbH, 07607 Eisenberg/Thür. (DE)
(72) Erfinder: DAUER, Sebastian, 96472 Rödental (DE); FORKEL, Frank, 96472 Rödental (DE); ULLRICH, Stefan, 96472 Rödental (DE)
(74) Vertreter: Hecht, Jan-David

(56) Entgegenhaltungen:
- EP-A2- 1 059 391
- WO-A2-2015/166517
- DE-U1-202014 000 227
- DE-U1-202016 003 064
- GB-A- 856 064
- GB-A- 2 502 527
- US-A- 4 212 314
- US-A1- 2004 183 301

## Beschreibung

Die vorliegende Erfindung betrifft ein System zur Belüftung einer Abwasserleitung nach dem Oberbegriff von Anspruch 1.

Rohrbelüfter, auch Belüftungsventile genannt, werden in der Gebäudeentwässerung, insbesondere in Sanitärinstallationen eingesetzt, um Abwasserleitungen zu belüften. Sie arbeiten mechanisch und weisen üblicherweise ein Rückschlagventil auf, dass bei Unterdruck in der mit dem Rohrbelüfter verbundenen Abwasserleitung öffnet, um Luft aus der Umgebung des Rohrbelüfters in die Abwasserleitung einzuspeisen und dadurch den Unterdruck abzubauen, und das bei Normaldruck bzw. Überdruck in der Abwasserleitung sicher schließt, damit keine Gerüche aus dem Rohrbelüfter austreten können.

Ein typischer Rohrbelüfter ist in der EP 1 650 363 A3 und der DE 10 2016 203 980 A1 angegeben. Dieser weist einen Schwerkraft betätigten Ventilteller auf, der gegenüber einem Ventilsitz in einer Richtung abdichtet, wodurch der Rohrbelüfter wartungsarm ausgebildet ist. Nach der zuständigen DIN EN 12056-02 und DIN 1986-100 in Verbindung mit DIN EN 12380 dürfen solche Rohrbelüfter in Gebäuden nur zusätzlich mit über Dach geführten Lüftungsleitungen mit DN 70 eingesetzt werden, wenn die Rohrbelüfter im Falle eines Defekts ohne bauliche Maßnahmen ausgetauscht werden können und für ausreichend Luftzutritt gesorgt ist. Dazu werden solche Rohrbelüfter in von den Herstellern angebotenen Vorwandinstallationen verbaut, die einen Wandeinbaukasten mit Abdeckplatte und Lüftungsöffnungen aufweisen und zusätzlichen Bauraum benötigen.

Die GB 856 064 A betrifft einen Rohrbelüfter mit einem konischen Verschlusselement, das gegen einen Dichtungssitz wirkt und eine Belüftungsöffnung freigibt oder verschließt. Der Raum hinter dem Verschlusselement korrespondiert mit einem Anschlussstück, das mit einer Abwasserleitung verbindbar ist. Beim Auftreten eines Unterdrucks wird das Verschlusselement angehoben und Luft kann über die Eintrittsöffnung in die Leitung einströmen.

Die GB 2 502 527 A offenbart einen Rohrbelüfter, der im Rahmen eines Rückflussverhinderers, der eine schwenkbare Klappe aufweist, zugleich einen druckbedingten Rückfluss verhindert und Unterdruck in Abwasserleitungen abbaut. Dieser Rohrbelüfter ist senkrecht ausgerichtet und das Dichtungsventil ist eine Membran, die nach oben wirkt.

Die US 4212 314 offenbart eine Kombination aus einem Siphon und einem Rohrbelüfter, wobei der Rohrbelüfter aus einer Belüftungsöffnung besteht, die durch einen Dichtungssitz geführt wird, der von einem Dichtungsring schwerkraftbedingt verschlossen wird.

Die EP 1059 391 A2 offenbart ebenfalls die Kombination eines Siphons 3 mit einem Rohrbelüfter, wobei der Rohrbelüfter senkrecht an einem Abfluss 2 angeordnet ist.

Die DE 20 2014 000227 U1 offenbart einen Rohrbelüfter zum Unterputzeinbau in Nass- und Trockenbauwänden. Der Rohrbelüfter besteht dabei aus einem Gehäuse, das mit einem Abwasseranschluss verbindbar ist. Das Gehäuse weist ein Öffnung auf, in die das eigentliche Rohrbelüfterventil abgedichtet einsetzbar ist. Die Öffnung liegt dabei senkrecht zum Dichtungsventilsitz. Befestigt wird das Gehäuse mittels Befestigungslaschen an einer Wand, wobei das Rohrbelüftungsventil zwischen der Wand und einer Vorwand angeordnet ist. Als Abstandshalter zwischen der Wand und dem Rohrbelüftungsventil dient ein Bauschutz, in den ein Abdeckungsdeckel mit einem Lüftungsschlitz eingesetzt ist. (D5)

In der US 2004/183301 A1 wird eine Rohrverbindung zwischen einer Muffe und einem Einsteckstück beschrieben, wobei die Muffe eine Führungsnut aufweist, in die ein Vorsprung des Einsteckstücks eintaucht. Mittels einer Spannfeder, die hinter einem Vorsprung des Einsteckstücks anliegt, wird diese Verbindung verriegelt.

Die DE 20 2016 003 064 U1 betrifft die Verwendung eines Rohrbelüfters in Zusammenhang mit einem Unterputz-WC-Spülkasten im Rahmen einer Vorwandinstallation, wobei das Abschlussrohr mit einem Rohr mit einem Rohrbelüfter verbunden ist. Dieser Rohrbelüfter ist direkt in dem WC-Spülkasten angeordnet und zwar so, dass er über die Öffnung des Betätigungselementes erreichbar ist.

Die WO 2015/166 517 A2 offenbart einen Spülkasten, wobei die Entlüftungsleitung von dem Abflussrohr in den Spülkasten führt. Dort wird ein Siphon ausgebildet durch Eintauchen dieses Rohrs in den mit Wasser gefluteten Spülkasten. Zusätzlich ist noch ein Sperrventil vor dem Zuleitungsrohr angeordnet, das auch als Rohrbelüfter ausgebildet sein kann.

Es ist Aufgabe der vorliegenden Erfindung, ein System zur Belüftung einer Abwasserleitung bereitzustellen, das gegenüber diesen bekannten Ausgestaltungen verbesserte Eigenschaften aufweist.

Diese Aufgabe wird gelöst mit dem erfindungsgemäßen System nach Anspruch 1. Vorteilhafte Weiterbildungen sind in den Unteransprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn der Rohrbelüfter in einem Unterputzspülkasten einer Sanitärinstallation angeordnet wird und einen Lufteinlass aufweist, der so ausgebildet ist, dass der Rohrbelüfter keine Luft aus dem Unterputzspülkasten ansaugt. In dem Unterputzspülkasten sind die erforderlichen Einbaukriterien erfüllt, da der Rohrbelüfter ausreichend Luftzufuhr hat und zudem im Wartungsfall durch die bei solchen Unterputzspülkästen stets vorgesehenen Revisionsöffnungen, die zumeist durch eine Bedieneinheit des Unterputzspülkastens verschlossen sind, leicht zugänglich ist und daher ohne bauliche Maßnahmen ausgetauscht werden kann. Solche Unterputzspülkästen sind in Gebäuden zahlreich vorhanden, so dass kein zusätzlicher Bauraum vorgesehen werden muss. Vorteilhaft ist der Rohrbelüfter dabei so aufgebaut, dass er in horizontaler Lage einbaubar ist. Dann kann er nämlich besonders einfach in einen Unterputzspülkasten einer Sanitärinstallation integriert werden, da er von der Seite des Unterputzspülkastens in diesem gehalten und mit einer Abwasserleitung verbunden werden kann.

Das erfindungsgemäße System zur Belüftung einer Abwasserleitung, umfassend einen Rohrbelüfter und einen Unterputzspülkasten mit einer Vorwandinstallation Rohrbelüftung mit einem Rohrbelüfter, wobei der Rohrbelüfter in der Vorwandinstallation des Unterputzspülkasten angeordnet ist, ist dadurch gekennzeichnet, dass der Rohrbelüfter einen Lufteinlass aufweist, der so ausgebildet ist, dass der Rohrbelüfter keine Luft aus dem Unterputzspülkasten ansaugt. Dadurch ist der Rohrbelüfter sehr leicht für Montage und Austausch zugänglich und nimmt keinen zusätzlichen Bauraum in Anspruch, weil dieser Bauraum für die Vorwandinstallation eines Unterputzspülkastens selbst zur Verfügung gestellt werden muss. Weiterhin ist vorgesehen, dass der Rohrbelüfter einen Lufteinlass aufweist, der so ausgebildet ist, dass die aufgenommene Luft nicht aus dem Unterputzspülkasten stammt. Dann wird eine Kontamination des Spülwassers durch Stoffe aus der Abwasserleitung auch im Fall eines Defekts des Rückschlagventils des Rührbelüfters wirksam verhindert.

Diese Art der Installation eines Rohrbelüfters kann vorteilhaft bei jeder Art Rohrbelüfter verwendet werden. Es könnte also auch ein konventioneller Rohrbelüfter mit vertikal ausgerichtetem Rohrstutzen verwendet werden.

Unter einem "Unterputzspülkasten" werden alle Spülkästen verstanden, die nicht sichtbar in einem Raum angeordnet sind. Dabei kann es sich um einen Spülkasten eines WC oder eines Urinals und dgl. handeln.

Unter "Vorwandinstallation" werden alle Installationen verstanden, die die verdeckte Montage an einer Gebäudewand ermöglichen. Dabei kann es sich beispielsweise um Rahmen, Stützen, Streben und dgl. handeln.

Erfindungsgemäß ist der Rohrbelüfter in dem Unterputzspülkasten angeordnet, wobei die Abwasserleitung insbesondere neben dem Unterputzspülkasten angeordnet ist. Dadurch ist der Rohrbelüfter besonders platzsparend angeordnet.

In einer vorteilhaften Weiterbildung ist vorgesehen, dass der Rohrbelüfter oberhalb einer Maximalhöhe einer im Unterputzspülkasten vorhandenen Spülwassermenge angeordnet ist. Dann ist die Montage sehr kompakt und die Funktion des Rohrbelüfters ist dennoch sichergestellt.

Wenn ein Rohrbelüfter für Abwasserleitungen eingesetzt wird mit einem Belüfterkörper, der einen Rohrstutzen zur Kopplung mit der Abwasserleitung und einen Luftführungskanal zum Luftaustausch zwischen der Umgebung und der Abwasserleitung aufweist, und mit einem Rückschlagventil mit einer Schließrichtung, das den Luftaustausch zwischen der Umgebung und der Abwasserleitung öffnet, wenn gegenüber dem Luftdruck der Umgebung ein Unterdruck in der Abwasserleitung besteht und das den Luftaustausch zwischen der Umgebung und der Abwasserleitung sperrt, wenn gegenüber dem Luftdruck der Umgebung kein Unterdruck in der Abwasserleitung besteht, wobei der Rohrstutzen in Bezug auf die Schließrichtung senkrecht an dem Belüfterkörper angeordnet ist, wird der Raumbedarf weiter verringert. Das Rückschlagventil ist dabei bevorzugt ein Schwerkraft betätigtes Rückschlagventil, weil dieses besonders wartungsarm ist.

In einer vorteilhaften Weiterbildung ist vorgesehen, dass der Luftführungskanal einen Lufteinlass aufweist, der bevorzugt lotrecht unterhalb des Rückschlagventils angeordnet ist. Dadurch ist der Rohrbelüfter sehr kompakt. Außerdem tritt kein Verkanten eines Schwerkraft betätigten Rückschlagventils auf.

In einer vorteilhaften Weiterbildung ist vorgesehen, dass der Lufteinlass eingerichtet ist, Luft seitlich von dem Rohrbelüfter, insbesondere von außerhalb eines Unterputzspülkastens anzunehmen. Dadurch wird wirksam verhindert, dass bei einem eventuellen Defekt des Rückschlagventils Stoffe aus der Abwasserleitung in einen direkt unterhalb des Rohrbelüfters gelegenen Bereich, insbesondere das Spülwasser in einem Unterputzspülkasten gelangen und dort zu einer Kontamination führen können.

In einer vorteilhaften Weiterbildung ist vorgesehen, dass der Lufteinlass, mit einer Luftzuführung verbunden oder koppelbar ist, wobei der der Lufteinlass bevorzugt einen Anschlussstutzen für die Ankopplung der Luftzuführung aufweist, wobei der Anschlussstutzen insbesondere eine Bajonettverriegelung für die Ankopplung der Luftzuführung aufweist. Dadurch wird die Montierbarkeit und Demontierbarkeit, insbesondere zu Wartungszwecken bedeutend verbessert.

In einer vorteilhaften Weiterbildung ist vorgesehen, dass der Lufteinlass so ausgebildet ist, dass er mit dem Unterputzspülkasten so koppelbar ist, dass die Luftannahme durch eine Außenwand des Unterputzspülkastens erfolgt. Dadurch wird eine Kontamination des Spülwassers in dem Unterputzspülkaten auch bei einem Defekt des Rückschlagventils wirksam verhindert.

In einer vorteilhaften Weiterbildung ist vorgesehen, dass der Belüfterkörper einen Deckel aufweist, der mit dem Belüfterkörper verriegelbar ausgebildet ist, wobei an dem Deckel Verriegelungselemente angeordnet sind, und zwischen zwei Verriegelungselementen eine Aussparung im Deckel angeordnet ist, wobei die Aussparung sich bevorzugt zwischen zur Abdichtung mit dem Belüftungskörper angeordneten Dichtungsmitteln des Deckels und einer durch die Verriegelungselemente gebildeten Verriegelungsebene erstreckt. Dadurch ist der Rohrbelüfter sehr kompakt, weil der Belüfterkörper in Bezug auf den Rohrstutzen relativ niedrig bauend ausbildbar ist.

In einer vorteilhaften Weiterbildung ist vorgesehen, dass der Rohrstutzen in Bezug auf das Rückschlagventil asymmetrisch am Belüftungskörper angeordnet ist, wobei der Belüftungskörper bevorzugt in Bezug auf die Horizontale einen runden Querschnitt aufweist und der Rohrstutzen versetzt zum Radius des Querschnitts angeordnet ist. Dadurch kann der Rohrbelüfter noch kompakter ausgebildet werden. Außerdem ist er so auch bei schwierigen räumlichen Anordnungsverhältnissen einsetzbar.

In einer vorteilhaften Weiterbildung ist vorgesehen, dass an dem Rohrstutzen erste Mittel zur Ausrichtung entlang des Umfangs des Rohrstutzens gegenüber der Abwasserleitung angeordnet sind, wobei die ersten Mittel zur Ausrichtung bevorzugt eine Zwangsführung beim Verbinden des Rohrstutzens mit der Abwasserleitung bereitstellen. Dadurch ist sichergestellt, dass der Rohrbelüfter in Bezug auf die Schließrichtung des Rückschlagventils stets vertikal aufrecht angeordnet wird.

In einer vorteilhaften Weiterbildung ist vorgesehen, dass die ersten Mittel zur Ausrichtung ein oder mehrere Vorsprünge aufweisen, die bevorzugt mit einem Adapterstück zusammenwirken, dass in den Rohrstutzen einsteckbar und mit dem Abwasseranschluss verbindbar ist. Dadurch ist die korrekte Ausrichtung konstruktiv besonders einfach sichergestellt. Wenn das Adapterstück vorliegt, lässt sich der Rohrbelüfter auch sicher durch Wandungen und dgl. führen.

In einer vorteilhaften Weiterbildung ist vorgesehen, dass das Adapterstück zweite Mittel zur Ausrichtung entlang des Umfangs des Adapterstücks gegenüber der Abwasserleitung aufweist, wobei die zweiten Mittel zur Ausrichtung bevorzugt eine Zwangsführung beim Einbau des Adapterstücks in einer Halterung des Rohrbelüfters bereitstellen, wobei die zweiten Mittel zur Ausrichtung insbesondere einen Vorsprung gegenüber dem Umfang des Adapterstücks aufweisen. Dann ist auch das Adapterstück sicher bezüglich seiner Ausrichtung festgelegt, so dass insgesamt die korrekte Ausrichtung des Rohrbelüfters gesichert ist.

In einer vorteilhaften Weiterbildung ist vorgesehen, dass der Rohrbelüfter an einer Seitenwand des Unterputzspülkastens angeordnet ist, wobei die Seitenwand bevorzugt mit dem Adapterstück zusammenwirkt. Dann ist die Montage ebenfalls sehr kompakt.

Bevorzugt weist der Lufteinlass eine Luftzuführung auf, die durch eine Wandung des Unterputzspülkastens geführt ist, insbesondere durch einen Deckel des Unterputzspülkastens. Dann ist der Rohrbelüfter besonders einfach zu montieren und zu warten.

Die Merkmale und weitere Vorteile der vorliegenden Erfindung werden im Folgenden anhand der Beschreibung bevorzugte Ausführungsbeispiele im Zusammenhang mit den Figuren deutlich werden. Dabei zeigen rein schematisch:
- Fig. 1: den im Rahmen des erfindungsgemäßen Systems einsetzbaren Rohrbelüfter nach einer ersten bevorzugten Ausgestaltung in einer perspektivischen Ansicht,
- Fig. 2: den Rohrbelüfter nach Fig. 1 in einer Seitenansicht,
- Fig. 3: den Rohrbelüfter nach Fig. 1 in einer Draufsicht,
- Fig. 4: den Rohrbelüfter nach Fig. 1 in einer Schnittansicht,
- Fig. 5: den Rohrbelüfter nach Fig. 1 ohne das Adapterstück in einer Seitenansicht,
- Fig. 6: den Rohrbelüfter nach Fig. 1 ohne das Adapterstück in einer Schnittansicht,
- Fig. 7: das Adapterstück des Rohrbelüfters nach Fig. 1 in perspektivischen Ansicht,
- Fig. 8: eine erfindungsgemäße Vorwandinstallation in einer ersten bevorzugten Ausgestaltung mit dem Rohrbelüfter nach Fig. 1,
- Fig. 9: eine Detailansicht der Vorwandinstallation nach Fig. 8 beim Einbau des Rohrbelüfters nach Fig. 1 in einer teilweisen Schnittdarstellung,
- Fig. 10: eine Detailansicht der Vorwandinstallation nach Fig. 8 mit dem eingebauten Rohrbelüfter nach Fig. 1 in einer teilweisen Schnittdarstellung,
- Fig. 11: eine Detailansicht einer erfindungsgemäßen Vorwandinstallation in einer zweiten bevorzugten Ausgestaltung mit einem Rohrbelüfter nach einer zweiten bevorzugten Ausgestaltung und
- Fig. 12: eine seitliche Schnittansicht in Bezug auf Fig. 11.

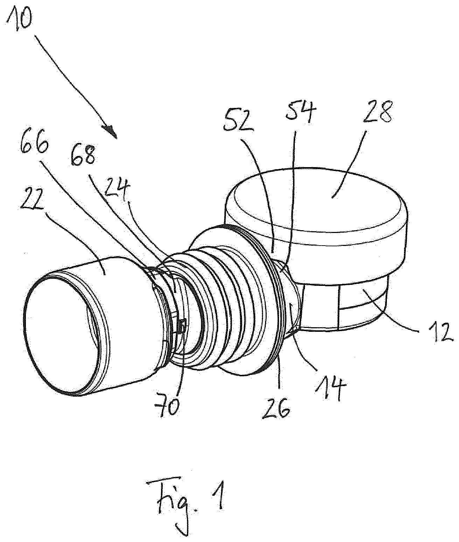

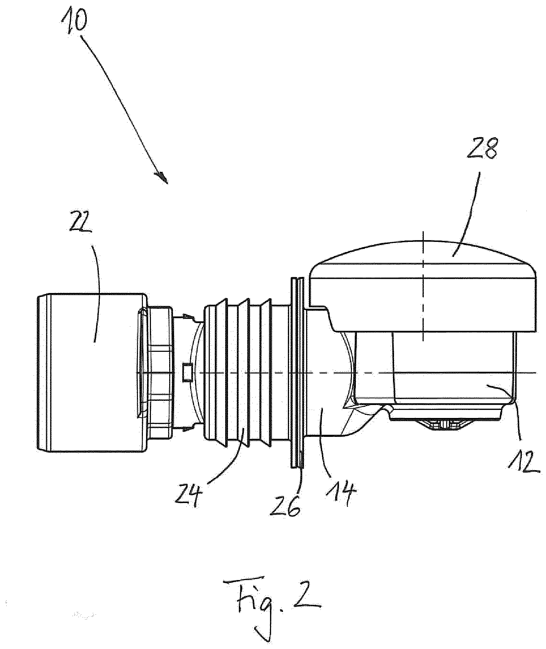

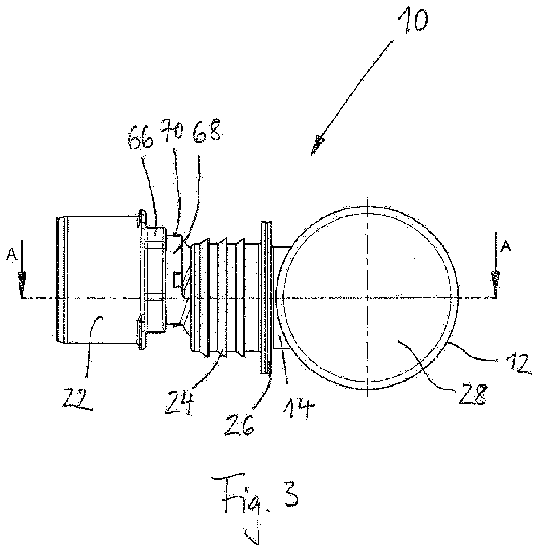

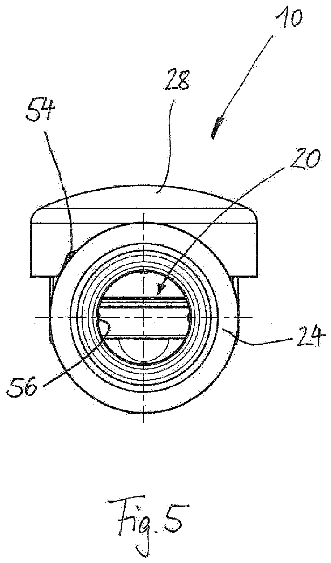

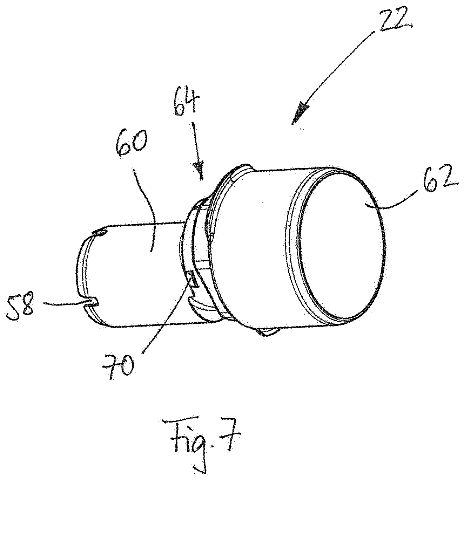

In den Fig. 1 bis 7 ist der im Rahmen des erfindungsgemäßen Systems einsetzbare Rohrbelüfter 10 gemäß einer ersten bevorzugten Ausgestaltung in verschiedenen Ansichten gezeigt.

Es ist zu erkennen, dass der Rohrbelüfter 10 einen Belüfterkörper 12 aufweist, mit einem Rohrstutzen 14 zur Kopplung mit der Abwasserleitung 100 und einem Luftführungskanal 16 zum Luftaustausch zwischen der Umgebung 18 und der Abwasserleitung 100. Außerdem ist in dem Belüfterkörper 12 ein Rückschlagventil 20 mit einer Schließrichtung angeordnet, das den Luftaustausch zwischen der Umgebung 18 und der Abwasserleitung 100 öffnet, wenn gegenüber dem Luftdruck der Umgebung 18 ein Unterdruck in der Abwasserleitung 100 besteht und das den Luftaustausch zwischen der Umgebung 18 und der Abwasserleitung 100 sperrt, wenn gegenüber dem Luftdruck der Umgebung 18 kein Unterdruck in der Abwasserleitung 100 besteht.

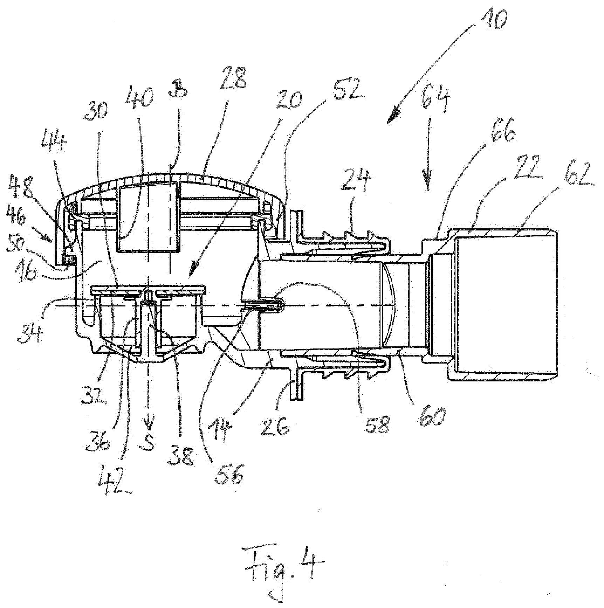

Zur Kopplung des Rohrstutzens 14 mit der Abwasserleitung 100 ist ein Adapterstück 22 in dem Rohrstutzen 14 angeordnet und über eine Gummidichtung 24 abgedichtet. Damit die Gummidichtung optimal auf dem Rohrstutzen sitzt, weist der Rohrstutzen einen auskragenden Anschlag 26 für die Gummidichtung 24 auf. In Fig. 4 ist diesbezüglich zu erkennen, dass die Gummidichtung sich nicht nur außen um den Rohrstutzen 14 erstreckt, sondern sich auch in den Rohrstutzen 14, diesen umgreifend hinein erstreckt und so zwischen dem Adapterstück 22 und dem Rohrstutzen 14 geklemmt wird.

Weiterhin weist der Rohrbelüfter 10 einen Deckel 28 auf, der auf dem Belüfterkörper 12 verriegelt ist.

Das Rückschlagvential 20 ist als Schwerkraft betätigtes Ventil ausgebildet und weist hierzu einen Ventilteller 30 mit einer unterhalb angeordneten Gummidichtung 32 auf. Der Ventilteiler 30 wirkt durch seine Schwerkraft bedingt auf einen darunter angeordneten Ventilsitz 34 in Schließrichtung S, wozu er mit einer Lagerhülse 36 auf einem Lagerstift 38 vertikal verschieblich angeordnet ist. Um ein Lösen der Lagerhülse 36 vom Lagerstift 38 zu verhindern ist am Deckel zentrisch oberhalb des Ventilteller 30 ein Hubbegrenzer 40, der als angeformte Hülse ausgebildet ist, angeordnet. Direkt unterhalb des Rückschlagventils 20 ist ein Lufteinlass 42 angeordnet, durch den Umgebungsluft durch das Rückschlagventil 20 in den Luftführungskanal 16 strömen kann.

Es ist weiterhin zu erkennen, dass das Rückschlagventil hinsichtlich des Lagerstifts 38 nicht konzentrisch mit der Symmetrieachse B des im Querschnitt rund ausgebildeten Belüftungskörpers 12 angeordnet ist, sondern eine Beabstandung des Rückschlagventils 20 von dem Rohrstutzen in Bezug auf die Symmetrieachse B vorliegt. Dadurch wird eine sichere Funktion des Rückschlagventils 20 gewährleistet, weil sich dadurch der Druck in der Abwasserleitung 100 dadurch über den Luftführungskanal 16 direkt von oben vermittelt.

Damit kein Luftaustausch zwischen dem Luftführungskanal 16 und der Umgebung 18 unter Umgehung des Rückschlagventils 20 stattfinden kann, besteht zwischen dem Deckel 28 und dem Belüfterkörper 12 eine Abdichtung 44, die zwischen dem Deckel 28 und dem Belüfterkörper 12 geklemmt wird. Die Verriegelung zwischen dem Deckel 28 und dem Belüfterkörper 12 ist als Bajonettverriegelung 46 ausgebildet ist, wobei gleich beabstandet am Belüfterkörper 12 und am Deckel 28 jeweils korrespondierende Kulissen 48 und Rastnasen 50 angeordnet sind.

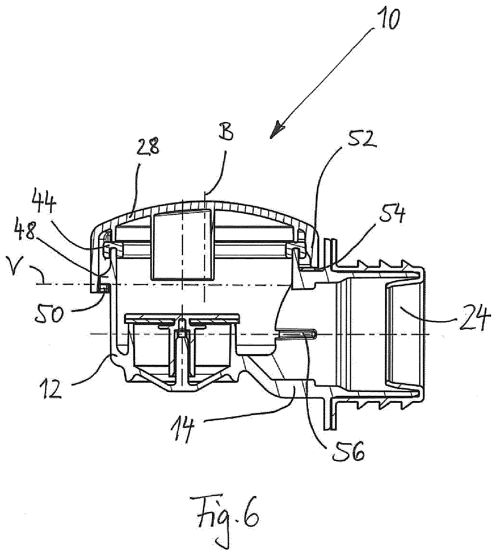

Damit der Deckel 28 sehr niedrig bauend auf dem Belüfterkörper 12 angeordnet werden kann, ist der Deckelrand 52 zwischen zwei Rastnasen 50 mit einer Aussparung 54 versehen, so dass er sich dennoch an dem Rohrstutzen 14 beim Ver- und Entriegeln vorbeiführen lässt. Die Aussparung 54 befindet sich in Bezug auf die Symmetrieachse B des Belüftungskörpers 12 zwischen der durch die korrespondierende Kulissen 48 und Rastnasen 50 gebildeten Verriegelungsebene V und der Abdichtung 44 zwischen Deckel 28 und Belüfterkörper 12 (vgl. Fig. 6).

Im Inneren des Rohrstutzens 14 sind weiterhin vier um 90° voneinander beabstandete Vorsprünge 56 angeordnet, die mit entsprechenden Ausnehmungen 58 eines ersten Anschlussstücks 60 des Adapterstücks 22 korrespondieren. Dadurch wird die Ausrichtung des Rohrbelüfters 10 gegenüber dem Adapterstück 22 und dessen Einstecktiefe exakt definiert, wobei dem Fachmann bewusst ist, dass der Rohrbelüfter 10 mit dem Deckel 28 senkrecht nach oben ausgerichtet sein muss, um ordnungsgemäß zu funktionieren.

Weiterhin weist das Adapterstück 22 ein zweites Anschlussstück 62 zur Verbindung mit dem Abflussrohr 100 auf. Zwischen den beiden Anschlussstücken 60, 62 ist ein treppenförmiger Übergang 64 angeordnet, dessen im Durchmesser stärkere Stufe 66 einen im Wesentlichen rechteckigen Querschnitt mit abgerundeten Ecken aufweist. An der schwächeren Stufe 68, die denselben Durchmesser wie das erste Anschlussstück 60 aufweist, jedoch seitlich versetzt zu dieser ausgebildet ist (vgl. Fig. 1, Fig. 3 und Fig. 7) sind Rastnasen 70 angeformt.

Dadurch, dass der Rohrstutzen 22 in Bezug auf die Schließrichtung S des Rohrbelüfters 10 senkrecht an dem Belüfterkörper 12, d.h. in horizontaler Richtung angeordnet ist, kann der Rohrbelüfter ohne weiteres direkt an horizontal verlaufende Abwasserleitungsabschnitte 100 angeschlossen werden.

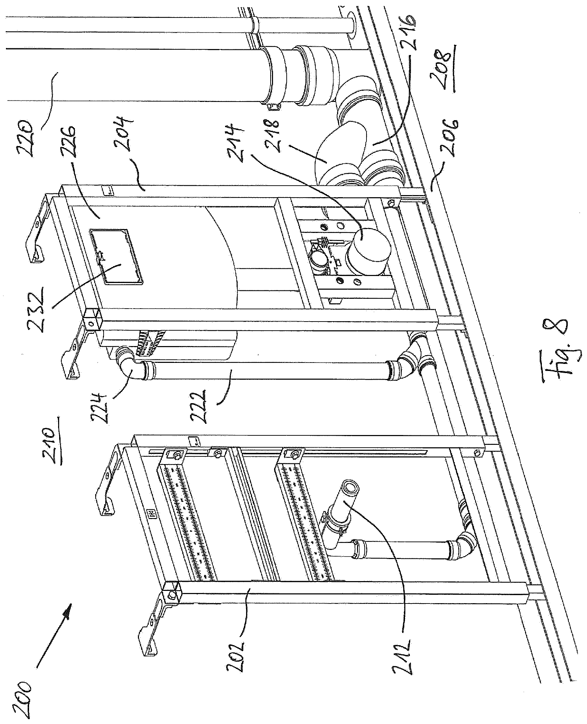

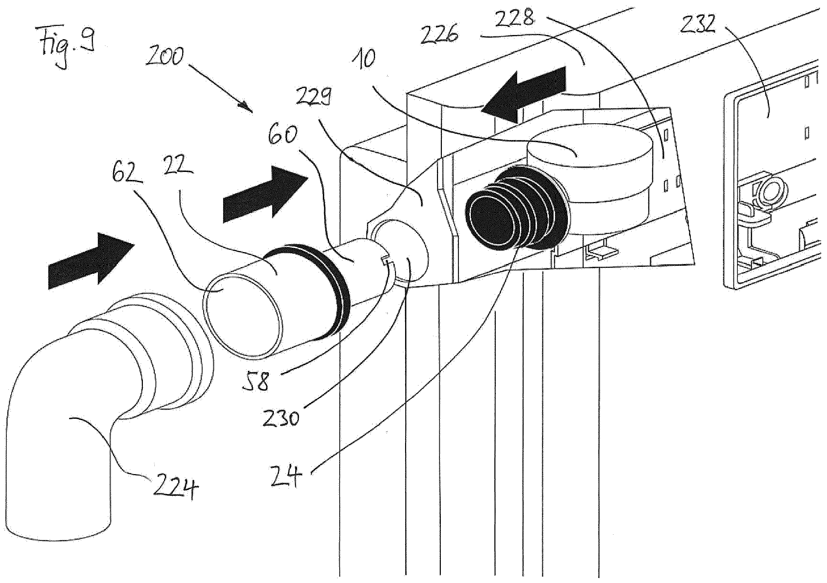

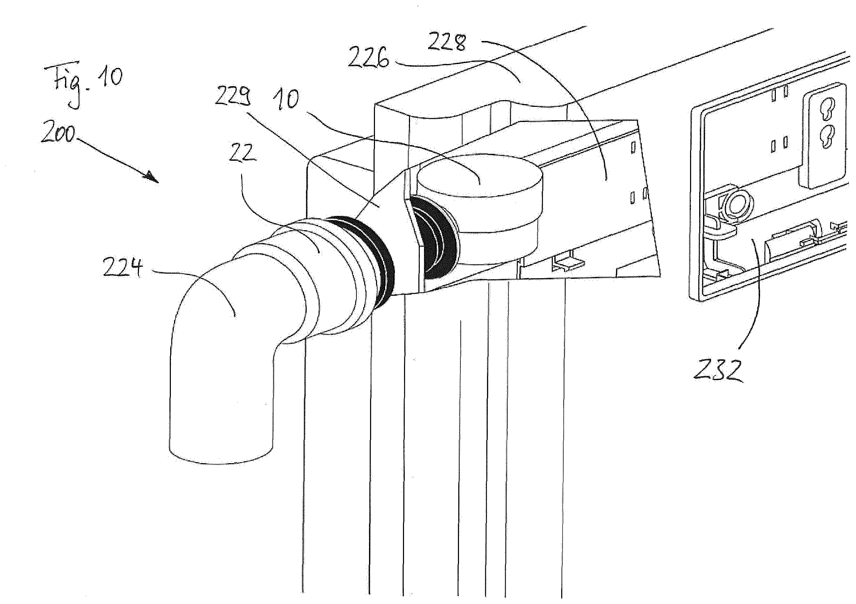

In den Fig. 8 bis 10 ist eine erste bevorzugte Ausführungsform einer mit dem Rohrbelüfter 10 bestückten erfindungsgemäßen Vorwandinstallation 200 in verschiedenen Ansichten gezeigt.

Es ist zu erkennen, dass die Vorwandinstallation 200 zwei Vorwandelemente 202, 204 aufweist, die an einer Schiene 206 am Boden 208 und einer Wand 210 angeordnet sind.

Das Vorwandelement 202 ist für die Aufnahme eines Waschtisches (nicht gezeigt) vorbereitet und das Vorwandelement 204 ist für die Aufnahme eines WC (nicht gezeigt) vorbereitet. Die entsprechenden Ablaufrohre 212, 214 münden in jeweilige Anschlüsse 216, 218 eines als Fallleitung ausgebildeten Abflussrohres 220.

Zusätzlich besteht ein vertikaler Leitungsabschnitt 222, der auf der einen Seite über ein Winkelstück 224 mit dem Rohrbelüfter 10 und auf der anderen Seite mit dem Ablaufrohr 212 und damit mit dem Abflussrohr 220 verbunden ist.

Das Vorwandelement 204 weist einen Unterputzspülkasten 226 auf, in dessen Inneren 228 der Rohrbelüfter 10 angeordnet ist.

Genauer gesagt weist der Unterputzspülkasten 226 in einer Seitenwand 229 eine Durchbrechung 230 auf, durch die das erste Anschlussstück 60 des Adapterstücks 22 geführt wird. Im Inneren 228 des Unterputzspülkastens 226 ist dieses erste Anschlussstück 60 des Adapterstücks 22 mit der Gummidichtung 24 des Rohrbelüfters 10 verbunden. Das zweite Anschlussstück 62 des Adapterstücks 22 wiederum ist mit dem Winkelstück 224 verbunden.

Die stärkere Stufe 66 des Adapterstücks 22 mit ihrer rechteckigen Querschnittsform passt formschlüssig in eine ebensolche Querschnittsform (nicht gezeigt) der Durchbrechung 230. Dadurch erfolgt eine Zwangsausrichtung des Adapterstücks 22 gegenüber der Seitenwand 229 und damit gegenüber dem Unterputzspülkasten 226. Durch die Rastnasen 70 wiederum wird das Adapterstück 22 gegenüber der Seitenwand 229 verrastet, die entsprechend angepasst an den Übergang zwischen starker 66 und schwacher Stufe 68 gestuft ausgebildet ist (nicht gezeigt), so dass das Adapterstück 22 an dem Unterputzspülkasten 226 sicher fixiert ist. Die Ausnehmungen 58 des Adapterstücks 22 wiederum wechselwirken formschlüssig mit den Vorsprüngen 56 im Rohrstutzen 14 des Rohrbelüfters 10, wodurch dieser Rohrbelüfter 10 automatisch korrekt gegenüber dem vertikalen Leitungsabschnitt 222 und dem Unterputzspülkasten 226 ausgerichtet ist.

Der Rohrbelüfter 10 kann dadurch in dem sowieso im Inneren 228 des Unterputzspülkastens 226 vorhandenen, bisher nicht genutzten Bauraum angeordnet werden, so dass kein zusätzlicher Bauraum für seine Vorsehung erforderlich ist. Außerdem bleibt der Rohrbelüfter 10 so für Wartungszwecke durch die Revisionsöffnung 232 des Unterputzspülkastens 226 zugreifbar, was bei anderen Anordnungen innerhalb der Vorwandinstallation 200 so nicht möglich wäre.

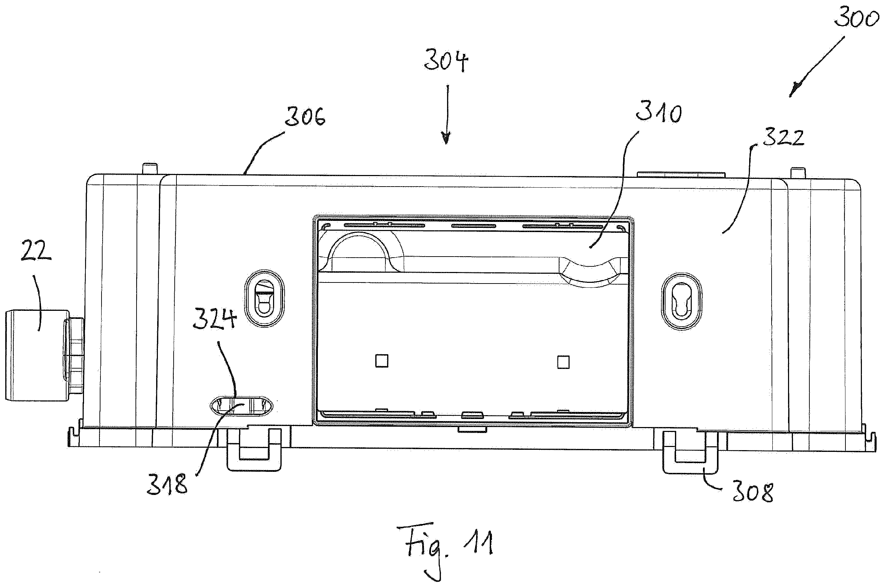

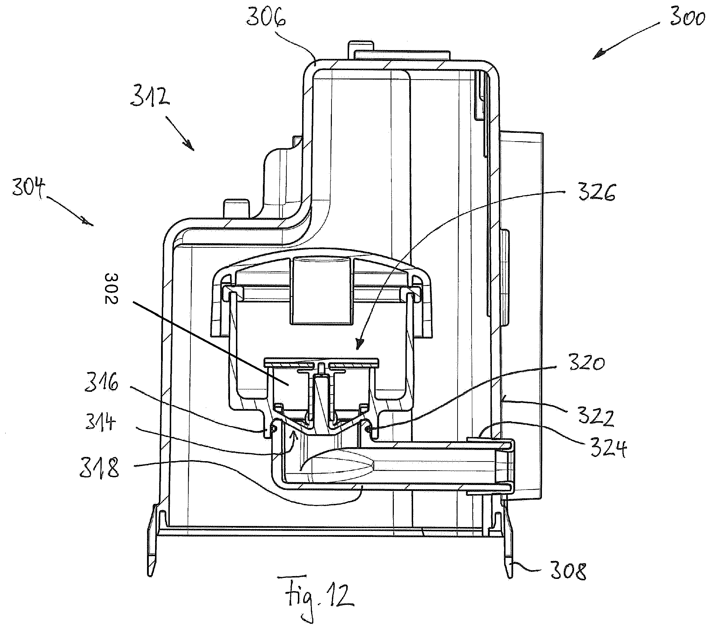

In den Fig. 11 und 12 ist eine zweite bevorzugte Ausgestaltung der erfindungsgemäßen Vorwandinstallation 300, die mit dem Rohrbelüfter 302 bestückt ist, in zwei Detailansichten gezeigt. Dabei wurde in Bezug auf Fig. 8 nur der Unterputzspülkasten 304, genauer nur ein einen Spülwasserbehälter (nicht gezeigt) abdeckenden Deckel 306 gezeigt. Fig. 11 zeigt den Deckel in einer Ansicht von vorn und Fig. 12 zeigt einen Schnitt durch den Deckel 306, auf den von rechts geblickt wird.

Es ist zu erkennen, dass der Deckel 306 mittels Rastverschlusselementen 308 an korrespondierenden Gegenrastverschlusselementen (nicht gezeigt) des Spülwasserbehälters arretiert werden kann.

In dem Deckel 306 ist wiederum eine Revisionsöffnung 310 angeordnet, in der eine Betätigungsvorrichtung (nicht gezeigt) anordenbar ist und durch die auf den Rohrbelüfter 302 zugegriffen werden kann. Weiterhin weist der Deckel 306 rückwärtig in Bezug auf die Revisionsöffnung 310 eine seitliche, sich über die gesamte Länge des Deckels 306 erstreckende Einbuchtung 312 auf, um innerhalb der Vorwandinstallation 300 Platz für beliebige Lagen eines nicht gezeigten Spülwasseranschlusses zu haben.

Der Rohrbelüfter 302, der wiederum mittels des Adapterstücks 22 aus dem Unterputzspülkasten 304, genauer durch den Deckel 306 geführt ist, ist in dieser Ausgestaltung im Wesentlichen identisch mit dem Rohrbelüfter 10 nach der ersten bevorzugten Ausgestaltung aufgebaut, weshalb auf dessen grundsätzlichen Aufbau und die diesbezügliche Funktionsweise nicht noch einmal eingegangen wird.

Im Unterschied dazu ist hier der Lufteinlass 314 des Rohrbelüfters 302 mit einem Anschlussstutzen 316 versehen, über den eine Luftzuführung 318, die als Winkelrohrstück ausgebildet ist, mit dem Lufteinlass 314 verbindbar ist. Zur leichten Montage und Demontage besteht zwischen Anschlussstutzen 316 und Luftzuführung 318 eine abgedichtete Bajonettverriegelung 320.

Die Luftzuführung 318 ist durch die Außenwand 322 des Deckels 306 geführt, genauer durch die Vorderseite 322 des Deckels 306, wobei eine Abdichtung 324 zwischen Vorderseite 322 und Luftzuführung 318 besteht, so dass die durch dem Lufteinlass 314 zugeführte Luft sicher von Außerhalb des Deckels und damit von außerhalb des Unterputzspülkastens 304 kommt.

Zur Demontage des Rohrbelüfters 302 wird dieser in Bezug auf Fig. 12 im Uhrzeigersinn soweit an dem Adapterstück 22 gedreht, bis die Luftzuführung 318 mit der Abdichtung 324 aus der Seitenwand 322 entfernt ist. Dann kann der Rohrbelüfter 302 von dem Adapterstück 22 abgezogen werden. Für die Montage wird in umgekehrter Reihenfolge vorgegangen. Beide Vorgänge können leicht über die Revisionsöffnung 310 vorgenommen werden. Durch diese besondere Gestaltung der Luftführung 324, 318, 316, 314 ist sichergestellt, dass auch im Fall eines Defekts des Rückschlagventils 326 keine Stoffe aus der Abwasserleitung (nicht gezeigt) über das Adapterstück 22 ggf. als Kondensat in den Unterputzspülkasten 304 und das darin befindliche Spülwasser gelangen können, da diese Stoffe über die Luftzuführung 318 sicher nach außerhalb des Unterputzspülkastens 304 abgeführt werden. Dort kann gegebenenfalls entstandenes Kondensat verdampfen, ohne dass eine Kontamination des Spülwassers und von dort eines Raumes (nicht gezeigt), in dem sich die Vorwandinstallation befindet, zu befürchten ist.

Aus der vorstehenden Darstellung ist deutlich geworden, dass mit der vorliegenden Erfindung ein Rohrbelüfter 10, 302 für Abwasserleitungen 100 bereitgestellt wird, mit dem die Rohrbelüftung mit weniger oder sogar ohne zusätzlichen Bauraum für den Rohrbelüfter 10, 302 in Gebäuden auskommt. Vorteilhaft kann der Rohrbelüfter 10, 302 direkt in schon vorhandenen Vorwandinstallationen 200, 300 für Unterputzspülkästen 226, 304 angeordnet werden. Dies wäre mit den bisher bekannten vertikal anordenbaren Rohrbelüftern nicht möglich, weil diese am Boden des Unterputzspülkastens 226, 304 angeordnet werden müsste, wo er Spülwasser ziehen würde. Mit dem in dem im Rahmen des erfindungsgemäßen Systems 200, 300 einsetzbaren Rohrbelüfter 302 wird eine Kontaminierung des Spülwassers auch für den Fall unterbunden, dass das Rückschlagventil 326 einmal defekt sein sollte.
- 10: Rohrbelüfter
- 12: Belüfterkörper
- 14: Rohrstutzen
- 16: Luftführungskanal
- 18: Umgebung
- 20: Rückschlagventil
- 22: Adapterstück
- 24: Gummidichtung
- 26: auskragender Anschlag des Rohrstutzens 14
- 28: Deckel des Rohrbelüfters 10
- 30: Ventilteller
- 32: Gummidichtung am Ventilteller 30
- 34: Ventilsitz 34
- 36: Lagerhülse
- 38: Lagerstift
- 40: Hubbegrenzer, angeformte Hülse am Deckel 28
- 42: Lufteinlass
- 44: Abdichtung zwischen Deckel 28 und Belüfterkörper 12
- 46: Verriegelung zwischen Deckel 28 und Belüfterkörper 12, Bajonettverriegelung
- 48: Kulissen am Belüfterkörper 12
- 50: Rastnasen am Deckel 28
- 52: Deckelrand
- 54: Aussparung im Deckelrand 52
- 56: Vorsprünge im Rohrstutzen 14
- 58: Ausnehmungen am Adapterstück 22
- 60: erstes Anschlussstück des Adapterstücks 22
- 62: zweites Anschlussstück des Adapterstücks 22
- 64: treppenförmiger Übergang zwischen den beiden Anschlussstücken 60, 62
- 66: im Durchmesser stärkere Stufe des treppenförmigen Übergangs 64
- 68: im Durchmesser schwächere Stufe des treppenförmigen Übergangs 64
- 70: Rastnasen
- 100: Abwasserleitungsabschnitt
- 200: Vorwandinstallation
- 202, 204: Vorwandelemente
- 206: Schiene
- 208: Boden
- 210: Wand
- 212, 214: Ablaufrohre
- 216, 218: Anschlüsse
- 220: Abflussrohr, Fallleitung
- 222: vertikaler Leitungsabschnitt
- 224: Winkelstück
- 226: Unterputzspülkasten
- 228: Inneres des Unterputzspülkasten 226
- 229: Seitenwand des Unterputzspülkasten 226
- 230: Durchbrechung in der Seitenwand 229
- 232: Revisionsöffnung des Unterputzspülkastens 226
- 300: Vorwandinstallation
- 302: Rohrbelüfter
- 304: Unterputzspülkasten
- 306: Deckel des Unterputzspülkastens 304
- 308: Rastverschlusselemente des Deckels 306
- 310: Revisionsöffnung
- 312: Einbuchtung des Deckels 306
- 314: Lufteinlass des Rohrbelüfters 302
- 316: Anschlussstutzen
- 318: Luftzuführung, Winkelrohrstück
- 320: abgedichtete Bajonettverriegelung
- 322: Außenwand, Vorderseite des Deckels 306
- 324: Abdichtung zwischen Vorderseite 322 und Luftzuführung 318
- 326: Rückschlagventil
- B: Symmetrieachse des Belüftungskörpers 12
- S: Schließrichtung
- V: Verriegelungsebene

## Patentansprüche

1. System (300) zur Belüftung einer Abwasserleitung (222), umfassend einen Rohrbelüfter (302) und einen Unterputzspülkasten (304) mit einer Vorwandinstallation (300), wobei der Rohrbelüfter (302) in der Vorwandinstallation (300) des Unterputzspülkasten (304) angeordnet ist, wobei der Rohrbelüfter (302) in dem Unterputzspülkasten (304) angeordnet ist, **dadurch gekennzeichnet, dass** der Rohrbelüfter (302) einen Lufteinlass (314) aufweist, der so ausgebildet ist, dass der Rohrbelüfter (302) keine Luft aus dem Unterputzspülkasten (304) ansaugt.

2. System (300) nach Anspruch 1, **dadurch gekennzeichnet, dass** der Lufteinlass (314) eine Luftzuführung (318) aufweist, die durch eine Wandung (322) des Unterputzspülkastens (304) geführt ist, insbesondere durch einen Deckel (306) des Unterputzspülkastens (304), und/oder dass die Luftzuführung (318) abgedichtet (320, 324) ausgebildet ist.

3. System (300) nach Anspruch 1 oder 2, **dadurch gekennzeichnet, dass** der Lufteinlass (314) so ausgebildet ist, dass er mit dem Unterputzspülkasten (304) so koppelbar ist, dass die Luftannahme durch eine Außenwand (322) des Unterputzspülkastens (304) erfolgt.

4. System (200; 300) nach einem der vorherigen Ansprüche, **dadurch gekennzeichnet, dass** der Rohrbelüfter (302) oberhalb einer Maximalhöhe einer im Unterputzspülkasten (304) vorhandenen Spülwassermenge angeordnet ist.

5. System (300) nach einem der vorherigen Ansprüche, **gekennzeichnet durch** den Rohrbelüfter (302) für Abwasserleitungen (222) mit einem Belüfterkörper (12), der einen Rohrstutzen (14) zur Kopplung mit der Abwasserleitung (222) und einen Luftführungskanal (16) zum Luftaustausch zwischen der Umgebung und der Abwasserleitung (222) aufweist, und mit einem Rückschlagventil (326) mit einer Schließrichtung (S), das den Luftaustausch zwischen der Umgebung und der Abwasserleitung (222) öffnet, wenn gegenüber dem Luftdruck der Umgebung ein Unterdruck in der Abwasserleitung (222) besteht und das den Luftaustausch zwischen der Umgebung und der Abwasserleitung (222) sperrt, wenn gegenüber dem Luftdruck der Umgebung kein Unterdruck in der Abwasserleitung (222) besteht, wobei der Rohrstutzen (14) in Bezug auf die Schließrichtung (S) senkrecht an dem Belüfterkörper (12) angeordnet ist.

6. System (300) nach Anspruch 5, **dadurch gekennzeichnet, dass** der Luftführungskanal (16) den Lufteinlass (314) aufweist, der bevorzugt lotrecht unterhalb des Rückschlagventils (326) angeordnet ist.

7. System (300) nach Anspruch 6, **dadurch gekennzeichnet, dass** der Lufteinlass (314) eingerichtet ist, Luft seitlich von dem Rohrbelüfter (302) anzunehmen.

8. System (300) nach Anspruch 6 oder 7, **dadurch gekennzeichnet, dass** der Lufteinlass (314), mit einer Luftzuführung (318) verbunden oder koppelbar ist, wobei der der Lufteinlass (314) bevorzugt einen Anschlussstutzen (316) für die Ankopplung der Luftzuführung (318) aufweist, wobei der Anschlussstutzen (316) insbesondere eine Bajonettverriegelung (320) für die Ankopplung der Luftzuführung (318) aufweist.

9. System (300) nach einem der Ansprüche 5 bis 8, **dadurch gekennzeichnet, dass** der Belüfterkörper (12) einen Deckel (28) aufweist, der mit dem Belüfterkörper (12) verriegelbar ausgebildet ist, wobei an dem Deckel (28) Verriegelungselemente (50) angeordnet sind, und zwischen zwei Verriegelungselementen (50) eine Aussparung (54) im Deckel (28) angeordnet ist, wobei die Aussparung (54) sich bevorzugt zwischen zur Abdichtung mit dem Belüftungskörper (12) angeordneten Dichtungsmitteln (44) des Deckels (28) und einer durch die Verriegelungselemente (50) gebildeten Verriegelungsebene (V) erstreckt.

10. System (300) nach einem der Ansprüche 5 bis 9, **dadurch gekennzeichnet, dass** der Rohrstutzen (14) in Bezug auf das Rückschlagventil (326) asymmetrisch am Belüftungskörper (12) angeordnet ist, wobei der Belüftungskörper (12) bevorzugt in Bezug auf die Horizontale einen runden Querschnitt aufweist und der Rohrstutzen (14) versetzt zum Radius des Querschnitts angeordnet ist.

11. System (300) nach einem der Ansprüche 5 bis 10, **dadurch gekennzeichnet, dass** an dem Rohrstutzen (14) erste Mittel (56) zur Ausrichtung entlang des Umfangs des Rohrstutzens (14) gegenüber der Abwasserleitung (222) angeordnet sind, wobei die ersten Mittel (56) zur Ausrichtung bevorzugt eine Zwangsführung beim Verbinden des Rohrstutzens (14) mit der Abwasserleitung (222) bereitstellen.

12. System (300) nach Anspruch 11, **dadurch gekennzeichnet, dass** die ersten Mittel zur Ausrichtung ein oder mehrere Vorsprünge (56) aufweisen, die bevorzugt mit einem Adapterstück (22) zusammenwirken, dass in den Rohrstutzen (14) einsteckbar und mit dem Abwasseranschluss (222) verbindbar ist.

13. System (300) nach Anspruch 12, **dadurch gekennzeichnet, dass** das Adapterstück (22) zweite Mittel (66) zur Ausrichtung entlang des Umfangs des Adapterstücks (22) gegenüber der Abwasserleitung (222) aufweist, wobei die zweiten Mittel (66) zur Ausrichtung bevorzugt eine Zwangsführung beim Einbau des Adapterstücks (22) in einer Halterung (230) des Rohrbelüfters (302) bereitstellen, wobei die zweiten Mittel (66) zur Ausrichtung insbesondere einen Vorsprung gegenüber dem Umfang des Adapterstücks (22) aufweisen.

14. System (300) nach einem der vorherigen Ansprüche, **dadurch gekennzeichnet, dass** der Rohrbelüfter (302) an einer Seitenwand (322) des Unterputzspülkastens (304) angeordnet ist, wobei die Seitenwand (229) bevorzugt mit dem Adapterstück (22) nach Anspruch 11 bis 13 zusammenwirkt.

15. System (300) nach einem der vorherigen Ansprüche, **dadurch gekennzeichnet, dass** die Abwasserleitung (222) neben dem Unterputzspülkasten (304) angeordnet ist.

## Claims

1. System (300) for ventilating a waste water line (222), comprising a pipe ventilator (302) and a concealed cistern (304) having a front-wall installation (300), wherein the pipe ventilator (302) is arranged in the front-wall installation (300) of the concealed cistern (304), wherein the pipe ventilator (302) is arranged in the concealed cistern (304), **characterised in that** the pipe ventilator (302) comprises an air inlet (314) which is designed such that the pipe ventilator (302) does not draw in any air from the concealed cistern (304).

2. System (300) according to claim 1, **characterised in that** the air inlet (314) comprises an air supply (318), which extends through a wall (322) of the concealed cistern (304), in particular through a cover (306) of the concealed cistern (304), and/or **in that** the air supply (318) is designed to be sealed (320, 324).

3. System (300) according to claim 1 or 2, **characterised in that** the air inlet (314) is designed such that it can be coupled to the concealed cistern (304) such that the air is admitted through an outer wall (322) of the concealed cistern (304).

4. System (200; 300) according to any of the preceding claims, **characterised in that** the pipe ventilator (302) is arranged above a maximum height of the quantity of flushing water found in the concealed cistern (304).

5. System (300) according to any of the preceding claims, **characterised by** the pipe ventilator (302) for waste water lines (222) comprising a ventilator body (12), which comprises a pipe socket (14) for coupling to the waste water line (222) and an air-conducting duct (16) for exchanging air between the surroundings and the waste water line (222), and comprising a non-return valve (326) having a closing direction (S) that opens the exchange of air between the surroundings and the waste water line (222) when there is a negative pressure in the waste water line (222) relative to the air pressure in the surroundings and blocks the exchange of air between the surroundings and the waste water line (222) when there is no negative pressure in the waste water line (222) relative to the air pressure in the surroundings, wherein the pipe socket (14) is arranged perpendicularly on the ventilator body (12) relative to the closing direction (S).

6. System (300) according to claim 5, **characterised in that** the air-conducting duct (16) comprises the air inlet (314), which is preferably arranged vertically below the non-return valve (326).

7. System (300) according to claim 6, **characterised in that** the air inlet (314) is configured to admit air laterally from the pipe ventilator (302).

8. System (300) according to claim 6 or 7, **characterised in that** the air inlet (314) is connected to or can be coupled to an air supply (318), wherein the air inlet (314) preferably comprises a connector port (316) for coupling the air supply (318), wherein the connector port (316) in particular comprises a bayonet lock (320) for coupling the air supply (318).

9. System (300) according to any of claims 5 to 8, **characterised in that** the ventilator body (12) comprises a cover (28) which is designed to be lockable to the ventilator body (12), wherein locking elements (50) are arranged on the cover (28) and a recess (54) is arranged in the cover (28) between two locking elements (50), wherein the recess (54) preferably extends between sealing means (44) of the cover (28) arranged for sealing to the ventilator body (12) and a locking plane (V) formed by the locking elements (50).

10. System (300) according to any of claims 5 to 9, **characterised in that** the pipe socket (14) is arranged asymmetrically on the ventilator body (12) relative to the non-return valve (326), wherein the ventilator body (12) preferably has a round cross section relative to the horizontal and the pipe socket (14) is arranged so as to be offset from the radius of the cross section.

11. System (300) according to any of claims 5 to 10, **characterised in that** first means (56) for orientation over the circumference of the pipe socket (14) relative to the waste water line (222) are arranged on the pipe socket (14), wherein the first means (56) for orientation preferably provide forced guidance when connecting the pipe socket (14) to the waste water line (222).

12. System (300) according to claim 11, **characterised in that** the first means for orientation comprise one or more projections (56), which preferably interact with an adapter piece (22) that can be inserted into the pipe socket (14) and can be connected to the waste water connection (222).

13. System (300) according to claim 12, **characterised in that** the adapter piece (22) comprises second means (66) for orientation over the circumference of the adapter piece (22) relative to the waste water line (222), wherein the second means (66) for orientation preferably provide forced guidance when installing the adapter piece (22) in a holder (230) of the pipe ventilator (302), wherein the second means (66) for orientation in particular comprise a projection relative to the circumference of the adapter piece (22).

14. System (300) according to any of the preceding claims, **characterised in that** the pipe ventilator (302) is arranged on a side wall (322) of the concealed cistern (304), wherein the side wall (229) preferably interacts with the adapter piece (22) according to claims 11 to 13.

15. System (300) according to any of the preceding claims, **characterised in that** the waste water line (222) is arranged beside the concealed cistern (304).

## Revendications

1. Système (300) pour l'aération d'une conduite d'eaux usées (222), comprenant un aérateur de tuyaux (302) et un réservoir de chasse d'eau encastré (304) avec une installation en saillie murale (300), l'aérateur de tuyaux (302) étant agencé dans l'installation en saillie murale (300) du réservoir de chasse d'eau encastré (304), l'aérateur de tuyaux (302) étant agencé dans le réservoir de chasse d'eau encastré (304), **caractérisé en ce que** l'aérateur de tuyaux (302) comprend une entrée d'air (314), qui est configurée de telle sorte que l'aérateur de tuyaux (302) n'aspire pas d'air du réservoir de chasse d'eau encastré (304).

2. Système (300) selon la revendication 1, **caractérisé en ce que** l'entrée d'air (314) présente une amenée d'air (318), qui est guidée à travers une paroi (322) du réservoir de chasse d'eau encastré (304), notamment à travers un couvercle (306) du réservoir de chasse d'eau encastré (304), et/ou **en ce que** l'amenée d'air (318) est configurée de manière étanche (320, 324).

3. Système (300) selon la revendication 1 ou 2, **caractérisé en ce que** l'entrée d'air (314) est configurée de manière à pouvoir être couplée au réservoir de chasse d'eau encastré (304) de telle sorte que la prise d'air a lieu à travers une paroi extérieure (322) du réservoir de chasse d'eau encastré (304).

4. Système (200 ; 300) selon l'une quelconque des revendications précédentes, **caractérisé en ce que** l'aérateur de tuyaux (302) est agencé au-dessus d'une hauteur maximale d'une quantité d'eau de rinçage présente dans le réservoir de chasse d'eau encastré (304).

5. Système (300) selon l'une quelconque des revendications précédentes, **caractérisé par** l'aérateur de tuyaux (302) pour conduites d'eaux usées (222) comprenant un corps d'aérateur (12), qui présente une tubulure (14) pour le couplage à la conduite d'eaux usées (222) et un canal de guidage d'air (16) pour l'échange d'air entre l'environnement et la conduite d'eaux usées (222), et comprenant un clapet anti-retour (326) avec une direction de fermeture (S), qui ouvre l'échange d'air entre l'environnement et la conduite d'eaux usées (222) lorsqu'il existe une sous-pression dans la conduite d'eaux usées (222) par rapport à la pression d'air de l'environnement et qui bloque l'échange d'air entre l'environnement et la conduite d'eaux usées (222) lorsqu'il n'existe pas de sous-pression dans la conduite d'eaux usées (222) par rapport à la pression d'air de l'environnement, la tubulure (14) étant agencée perpendiculairement sur le corps d'aérateur (12) par rapport à la direction de fermeture (S).

6. Système (300) selon la revendication 5, **caractérisé en ce que** le canal de guidage d'air (16) comprend l'entrée d'air (314), qui est de préférence agencée verticalement en dessous du clapet anti-retour (326).

7. Système (300) selon la revendication 6, **caractérisé en ce que** l'entrée d'air (314) est conçue pour recevoir de l'air latéralement à partir de l'aérateur de tuyaux (302).

8. Système (300) selon la revendication 6 ou 7, **caractérisé en ce que** l'entrée d'air (314) est connectée ou peut être couplée à une amenée d'air (318), l'entrée d'air (314) présentant de préférence une tubulure de raccordement (316) pour le couplage de l'amenée d'air (318), la tubulure de raccordement (316) présentant notamment un verrouillage à baïonnette (320) pour le couplage de l'amenée d'air (318).

9. Système (300) selon l'une quelconque des revendications 5 à 8, **caractérisé en ce que** le corps d'aérateur (12) présente un couvercle (28), qui est configuré pour pouvoir être verrouillé avec le corps d'aérateur (12), des éléments de verrouillage (50) étant agencés sur le couvercle (28), et un évidement (54) étant agencé dans le couvercle (28) entre deux éléments de verrouillage (50), l'évidement (54) s'étendant de préférence entre des moyens d'étanchéité (44) du couvercle (28) agencés pour assurer l'étanchéité avec le corps d'aération (12) et un plan de verrouillage (V) formé par les éléments de verrouillage (50).

10. Système (300) selon l'une quelconque des revendications 5 à 9, **caractérisé en ce que** la tubulure (14) est agencée sur le corps d'aération (12) de manière asymétrique par rapport au clapet anti-retour (326), le corps d'aération (12) présentant de préférence une section transversale circulaire par rapport à l'horizontale et la tubulure (14) étant agencée en décalage par rapport au rayon de la section transversale.

11. Système (300) selon l'une quelconque des revendications 5 à 10, **caractérisé en ce que** des premiers moyens (56) pour l'alignement le long de la périphérie de la tubulure (14) par rapport à la conduite d'eaux usées (222) sont agencés sur la tubulure (14), les premiers moyens (56) pour l'alignement fournissant de préférence un guidage forcé lors de la connexion de la tubulure (14) à la conduite d'eaux usées (222).

12. Système (300) selon la revendication 11, **caractérisé en ce que** les premiers moyens pour l'alignement comprennent une ou plusieurs protubérances (56), qui coopèrent de préférence avec une pièce d'adaptation (22), qui peut être insérée dans la tubulure (14) et connectée au raccord d'eaux usées (222).

13. Système (300) selon la revendication 12, **caractérisé en ce que** la pièce d'adaptation (22) comprend des deuxièmes moyens (66) pour l'alignement le long de la périphérie de la pièce d'adaptation (22) par rapport à la conduite d'eaux usées (222), les deuxièmes moyens (66) pour l'alignement fournissant de préférence un guidage forcé lors de l'installation de la pièce d'adaptation (22) dans un support (230) de l'aérateur de tuyaux (302), les deuxièmes moyens (66) pour l'alignement présentant notamment une protubérance par rapport à la périphérie de la pièce d'adaptation (22).

14. Système (300) selon l'une quelconque des revendications précédentes, **caractérisé en ce que** l'aérateur de tuyaux (302) est agencé sur une paroi latérale (322) du réservoir de chasse d'eau encastré (304), la paroi latérale (229) coopérant de préférence avec la pièce d'adaptation (22) selon les revendications 11 à 13.

15. Système (300) selon l'une quelconque des revendications précédentes, **caractérisé en ce que** la conduite d'eaux usées (222) est agencée à côté du réservoir de chasse d'eau encastré (304).
